# EUROPEAN PATENT APPLICATION

(11) **EP 1 748 115 A2**
(43) Date of publication of application: **31.01.2007**
(21) Application number: 06381020.4
(22) Date of filing: 03.05.2006
(51) Int. Cl.: E03F 3/04

(54) **Connecting piece between a manhole and a conduit and method for installing same**

(30) Priority: 28.07.2005 ES 200501857
(71) Applicant: Uralita Sistemas de Tuberias, S.A., 28004 Madrid (ES)
(72) Inventor: Muñoz De Juan, Ignacio, 28004 Madrid (ES)
(74) Representative: Esteban Perez-Serrano, Maria Isabel

(57) **Abstract**

Connecting piece between a manhole and a conduit and method for the installation of same where the connecting or coupling piece is characterised in that it connects the lower end of the shaft with the conduit in which it is inserted, and is furthermore the base of the manhole or inspection box.

## Description

### OBJECT OF THE INVENTION

The present invention refers to a connecting piece or element between an inspection shaft or manhole and a conduit, and the method for installing same.

The connecting piece or coupling is characterised in that it connects up the lower end of the manhole body with the conduit in which it is inserted, besides forming the base of the manhole or shaft.

### BACKGROUND OF THE INVENTION

Manholes are known where it is not possible to gain easy access to the conduit on which they are installed and the necessary actions have to be carried out from the upper portion of the manhole with appropriate devices.

In certain conduits the construction of manholes is resolved by making a hole and surrounding it with brickwork or concrete, thus forming the manhole. The shaft may be of sufficient size to allow an operator to descend down it by means of rungs secured in the wall so as to be able to collect samples or take measurements as required.

The present invention describes a connecting piece between a shaft and a conduit, which serves as the base of the shaft, as well as its installation method.

### DESCRIPTION OF THE INVENTION

The present invention describes a connecting piece between a manhole shaft and a conduit, which serves as the base of the shaft, as well as its installation method.

The manhole has a cylindrical central body which is linked to the piping by way of a connecting piece.

This connecting piece forms the base of the shaft, and it is extended superiorly in a circular wall of larger diameter than the central body, so that it encircles it exteriorly.

A sealing ring is placed between the inner face of the circular wall and the outer face of the central body of the shaft for sealing the assembly.

The centre of the coupling piece has a hole that is extended inferiorly in a cylinder which may be inserted into the interior of the conduit by way of the corresponding opening. A rubber clip is fitted between the connecting piece or coupling for sealing the assembly.

The body of the manhole may have the necessary perforations for possible intakes and outlets.

Furthermore, the body of the shaft may have access ladders at the base of the shaft, and the top end is closed with a cover that isolates the assembly.

The method for installing the manhole of the present invention comprises at least the following stages:
the conduit is buried up to a level higher than half its upper generatrix, with a selected granular material; in the event of the installation of the manhole being subsequent to the laying of the conduit, the conduit should be unearthed up to a level below half its upper generatrix,
an opening is made in the vertical of the upper generatrix of the conduit where the manhole is going to be positioned and the rubber clip is fitted in it,
it is formed and concreted up to the level of the clip,
the coupling piece is inserted that forms the base of the manhole, until it rests on the concrete slab,
when the concrete hardens, the body of the shaft fitted with a sealing ring is inserted,
it is filled with material until crowning the height of the body of the shaft.

### DESCRIPTION OF THE DRAWINGS

The present descriptive report is supplemented with a set of drawings illustrating the preferred specimen embodiment but never restricting the invention.

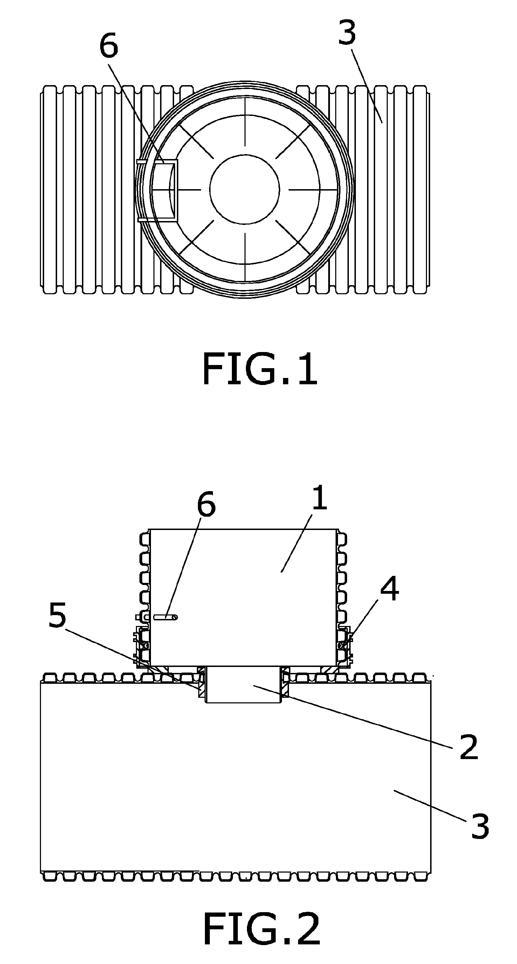

Figure 1 is an elevational representation of a manhole connected to a water conduit.
Figure 2 is a representation of Figure 1 sectioned along line DD'.

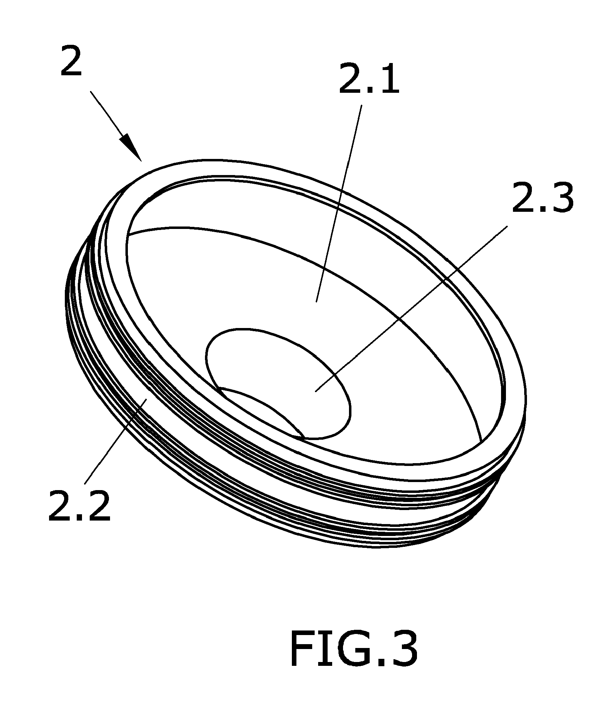

Figure 3 shows a perspective view of the coupling piece of the invention.

### PREFERRED EMBODIMENT OF THE INVENTION

The coupling piece (2) of the invention is situated between the central body (1) of a manhole and the water conduit (3) to which it is connected.

This coupling piece (2) forms the base (2.1) of the shaft and has an upper circular extension (2.2) of a diameter larger than the central body (1) of the shaft and a hole in the middle prolonged inferiorly in a cylinder (2.3), which is inserted into the conduit (3) by way of an opening.

Between the outer face of the central body (1) of the manhole and the inner face of the upper circular extension (2.2) a sealing ring (4) is placed for sealing the assembly and a rubber clip (5) is fitted between the opening in the conduit and the coupling piece.

The central body (1) of the manhole has a wall ladder (6) for access to the base (2.1) of the shaft.

In this specimen embodiment of the invention we describe the method for installing the manhole in a conduit with a diameter of 1000mm, which consists of the following stages:
the conduit (3) is buried and covered up to a level equal to two thirds of its upper generatrix with gravel,
an opening is made in the conduit (3) and the rubber clip (5) is fitted in it,
it is formed and concreted up to the level of the clip(5),
the coupling piece (2) that forms the base of the manhole is inserted until it rests on the concrete slab,
when the concrete hardens, the body of the manhole (1), fitted with a sealing ring (4), is then inserted,
it is filled with material until crowning the height of the shaft body (1).

The essential nature of this invention is not altered by variations in materials, shape, size and arrangement of the component elements, described on a non-restrictive basis, since this will suffice for it to be reproduced by an expert.

## Claims

1. Connecting piece (2) between a manhole and a conduit (3), **characterised in that** it forms the base (2.1) of the shaft and has an upper circular extension (2.2) of a diameter greater than the central body and in the middle of same a hole prolonged inferiorly in a cylinder (2.3), which is inserted in the conduit (3) by way of an opening, while a sealing ring (4) is placed between the outer face of the central body (1) of the manhole and the inner face of the upper circular extension (2.2), and a rubber clip (5) is fitted between the opening in the conduit and the coupling piece for the purpose of sealing the assembly.

2. Method for installing the connecting piece (2) between a manhole and a conduit (3) according to claim 1, **characterised in that** it comprises at least the following stages:
the conduit (3) is buried and covered up to more than half its upper generatrix with a selected granular material; in the event of the manhole being installed after the laying of the conduit, the conduit is unearthed up to a level below half its upper generatrix,
an opening is made in the vertical of the upper generatrix of the conduit (3) where the manhole is going to be positioned and a rubber clip (5) is fitted in it for the sealing of the assembly,
it is formed and concreted up to the level of the clip (5),
the coupling piece (2) forming the base of the manhole is inserted until it rests on the concrete slab,
when the concrete hardens, the body (1) of the manhole that has the sealing ring (4)fitted is inserted,
it is filled with material until topping the height of the manhole body (1).
